# EUROPÄISCHE PATENTSCHRIFT

(11) **EP 2 178 776 B1**
(45) Veröffentlichungstag und Bekanntmachung des Hinweises auf die Patenterteilung: **30.05.2012**
(21) Anmeldenummer: 08773888.6
(22) Anmeldetag: 07.07.2008
(51) Int. Cl.: B65G 1/14

(54) **KLINKE FÜR EINE STAPELSÄULE UND BAUSATZ FÜR EINE SOLCHE KLINKE**
LATCH LEVER FOR A STACKING COLUMN AND ASSEMBLY KIT FOR SUCH A LATCH LEVER
BRAS DE CONSOLE POUR UNE COLONNE D'EMPILAGE ET KIT D'ASSEMBLAGE POUR UN TEL BRAS DE CONSOLE

(30) Priorität: 09.07.2007 DE 102007031997
(43) Veröffentlichungstag der Anmeldung: 28.04.2010
(73) Patentinhaber: MTS Maschinenbau GmbH, 88512 Mengen (DE)
(72) Erfinder: STROBEL, Gustav, 88348 Bad Saulgau (DE)
(74) Vertreter: Weiss, Peter
(86) Internationale Anmeldenummer: PCT/EP2008/005517
(87) Internationale Veröffentlichungsnummer: WO 2009/007078

(56) Entgegenhaltungen:
- EP-A- 0 536 571
- EP-A- 0 542 109
- EP-A- 0 604 337
- WO-A-2007/137832
- DE-U1- 9 408 344
- DE-U1- 20 319 883
- DE-U1- 29 823 650
- DE-U1- 29 914 281

## Beschreibung

Die Erfindung betrifft eine Klinke für eine Stapelsäule nach Anspruch 1, sowie einen Bausatz für eine Klinke nach Anspruch 3.

### Stand der Technik

Stapelsäulen sind in vielfältiger Norm bekannt und auf dem Markt. Verwendet werden Stapelsäulen vor allem bei der Herstellung von Karrosserieteilen in der Automobilindustrie. Die entsprechenden Karrosserieteile werden über Roboter aus den Pressen genommen und vor einer Weiterverarbeitung in Stapelsäulen zwischengelagert. In der Regel sind vier Stapelsäulen im Rechteck aufgestellt.

Jede Stapelsäule besitzt eine Vielzahl von Klinken, die übereinander angeordnet sind. Eine erste Klinke befindet sich dabei meist in Bereitschaftsstellung. Wird ein Lagergut auf diese Klinke aufgelegt, schwenkt die Klinke in Arbeitsstellung und nimmt dabei eine nachfolgende Klinke mit, die auf diese Weise in Bereitschaftsstellung gelangt. Eine derartige Stapelsäule ist beispielsweise aus der DE 38 11 310 C1 bekannt.

Stapelsäulen werden aber auch zur horizontalen Lagerung von Lagergütern verwendet, wie dies beispielsweise in der DE 40 20 864 A1 beschrieben ist. Die Funktionsweise dieser horizontalen Stapelsäulen ähnelt denjenigen der vertikalen Stapelsäulen.

Ein wesentliches Problem bei Stapelsäulen stellt die Teilung der Klinken dar. Unterschiedliche Lagergüter benötigen auch eine unterschiedliche Teilung. Hierzu ist in der WO 03103551 A1 beispielsweise vorgesehen, dass die Klinken miteinander wenigstens über eine Mitnehmerlasche gekoppelt sind, wobei zur Reduktion einer Teilung benachbarter Klinken zumindest eine Mitnehmerlasche abgewinkelt oder gekröpft oder bogenartig ausgebildet ist.

Die EP 0 604 337 A1 offenbart eine Stapelsäule mit Seitenwangen, in die Führungen eingelassen sind, wobei in die Führungen Lagerböcke eingesetzt werden können

Die DE 203 19 883 U1 offenbart austauschbar an einem Steuerarm von Klinken von Stapelsäulen angeordnete Einsätze, welche als Mitnahmewinkel verwendet werden.

Die DE 29914 281 U1 offenbart eine klinke gemäß dem Oberbegriff des Anspruchs 1.

### Aufgabe

Aufgabe der vorliegenden Erfindung ist es, eine Klinke für eine Stapelsäule zur Verfügung zu stellen, um eine möglichst flexible, einfache und schnelle Anpassung an unterschiedliche Nutzerwünsche vornehmen zu können.

### Lösung der Aufgabe

Zur Lösung der Aufgabe führen die gegenstände der Ansprüche 1 und 3.

Erfindungsgemäß können sich auf dem Tragarm oder an dem Tragarm unterschiedlichste Auf- oder Ansätze befinden, die den jeweiligen Wünschen des Benutzers Rechnung tragen können. Denkbar ist auch, dass hierdurch die Klinke selbst verlängert wird, oder sie kann beispielsweise mit einer verschleissfesten Schicht belegt werden. Ferner ist denkbar, dass von der Klinke nach unten hin ein Ansatz abragt, der auf ein Lagergut auf einen Tragarm einer darunterliegenden Klinke drückt und dieses Lagergut vorspannt.

Bei dieser erfindüngsgemässen Klinke ist vor allem auch daran gedacht, den eigentlichen Grundkörper, der immer wieder verwendet werden kann, zusammen mit den Achsstummeln einstückig herzustellen. Hierzu bietet sich die Herstellung im Guss- oder Spritzgussverfahren aus Kunststoff an.

Von der Erfindung wird auch ein Bausatz gemäß Anspruch 3 beansprucht. Dieser Bausatz kann beispielsweise einem Kunden zur Herstellung von Stapelsäulen zu Verfügung gestellt werden, wobei ihm gleichzeitig unterschiedliche Klinken, Lagerböcke mit unterschiedlicher Länge und entsprechende Distanzstücke mitgeliefert werden. Gleich bleiben nur die Seitenwangen mit den Führungen.

Erfindungsgemäss ist nun in dem Steuerarm ein Einsatz vorgesehen, der austauschbar ausgestaltet ist. Auf diese Weise kann eine Höhe dieses Einsatzes einer gewünschten Teilung angepasst werden. Hierzu ragt bevorzugt von dem Einsatz eine keilförmige Nase auf, deren Höhe je nach verwendetem Einsatz variiert.

### Figurenbeschreibung

Weitere Vorteile, Merkmale und Einzelheiten der Erfindung ergeben sich aus der nachfolgende Beschreibung bevorzugter Ausführungsbeispiele sowie anhand der Zeichnung; diese zeigt in
Fig. 1 eine Seitenansicht eines Teils einer geöffneten Stapelsäule
Fig. 2 eine Draufsicht auf Teile einer Stapelsäule;
Fig. 3 eine perspektivische Draufsicht auf eine erfindungsgemässe Klinke;
Fig. 4 eine perspektivische Unteransicht der Klinke gem. Fig. 3;
Fig. 5 eine Draufsicht auf die erfindungsgemässe Klinke gem. Fig. 3;
Fig. 6 einen Längsschnitt durch die Klinke gem. Fig. 5 entlang Linie A - A;
Fig. 7 einen Längsschnitt durch die Klinke gem. Fig. 5 entlang Linie B - B;

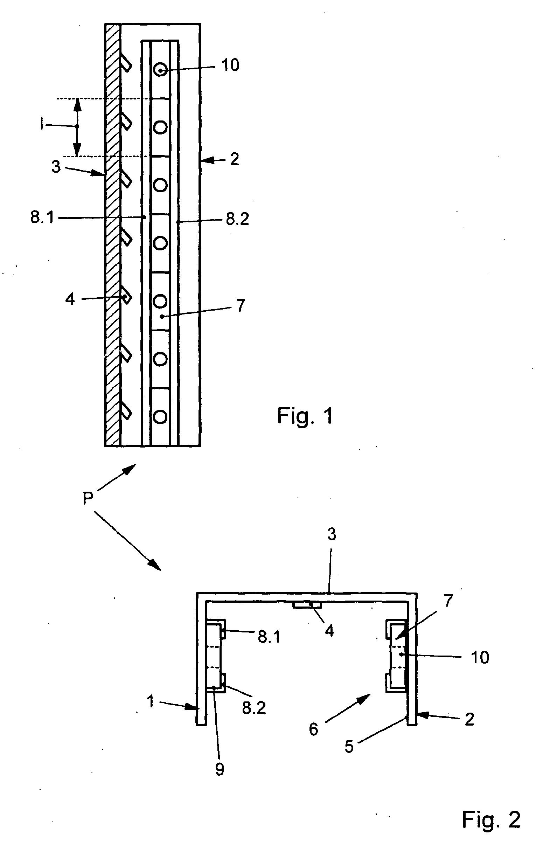

Eine Stapelsäule P weist gem. den Fig. 1 und 2 zwei Seitenwangen 1 und 2 auf, die durch eine Rückwand 3 miteinander verbunden sind. Aus der Rückwand 3 ist eine Mehrzahl von Anschlägen 4 ausgeklinkt, wie dies näher in der DE 298 09 118 U 1 beschrieben ist.

An jeder Innenwand 5 der beiden Seitenwangen 1 und 2 ist jeweils eine Führung 6 für Lagerböcke 7 vorgesehen. Jede Führung 6 besteht dabei aus zwei Winkeln 8.1 und 8.2, die spiegelbildlich angeordnet sind und so eine hinterschnittene Nut 9 zum Führen der Lagerböcke 7 bilden.

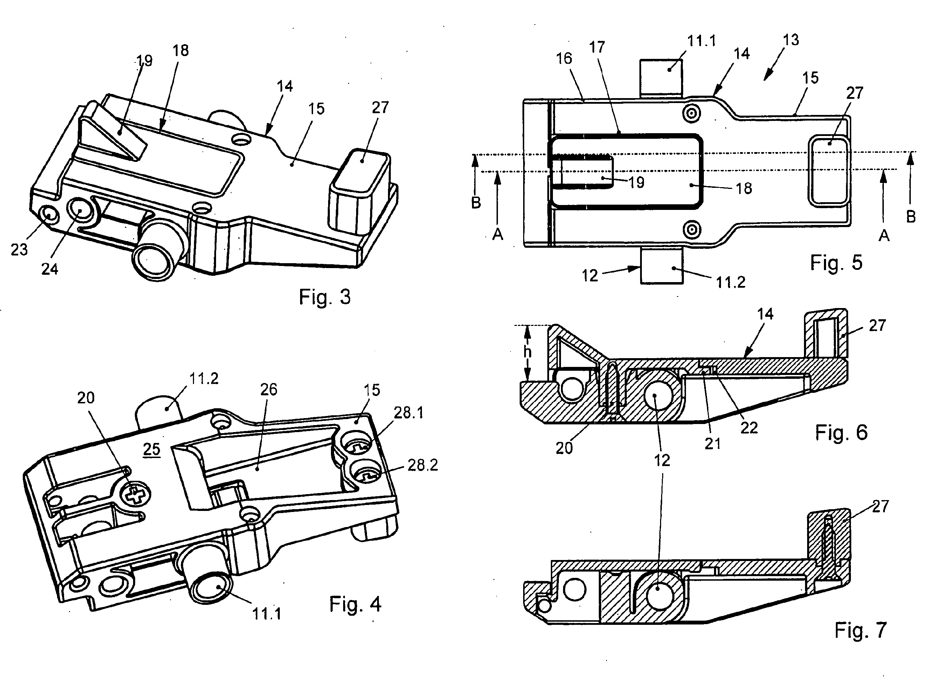

In jeden Lagerbock 7 ist eine Bohrung 10 eingeformt, die der Aufnahme von Achsstummeln 11.1 bzw. 11.2 einer Drehachse 12 und einer Klinke 13 dienen. Eine entsprechende Klinke 13 ist in den Figuren 3 bis 7 gezeigt.

Die Klinke 13 weist einen Grundkörper 14 auf, der einerseits der Achse 12 einen Tragarm 15 und andererseits der Achse 12 einen Steuerarm 16 ausbildet. Dabei sind der Grundkörper 14 und die Achse 12 bzw. die Achsstummel 11.1 und 11.2 bevorzugt einstückig im Guss- oder Spritzgussverfahren aus Kunststoff hergestellt.

In den Steuerarm 16 und die Achse 12 übergreifend ist eine Ausnehmung 17 eingeformt, in der ein Einsatz 18 austauschbar sitzt. Von diesem Einsatz 18 ragt eine keilförmige Nase 19 auf. Der. Einsatz 18 selbst ist durch eine Schraube 20 mit dem Grundkörper 14 verbunden, wobei er noch mit einem Frontstreifen 21 in eine am Grundkörper 14 gebildete Nut 22 eingreift.

Am Steuerarm 16 sind des Weiteren noch Bohrungen 23 und 24 zu erkennen, die beispielsweise der Aufnahme von Gewichten dienen können, mit denen eine Klinke 13 in ihre Ruhelage zwischen den beiden Seitenwangen und 2 rückführbar ist.

In den Tragarm 15 ist von einer Unterfläche 25 der Klinke 13 ausgehend eine Ausnehmung 26 eingeformt. Diese dient beispielsweise der Aufnahme eines ebenfalls auswechselbaren Aufsatzes 27 auf dem Tragarm 15, sofern sich die darunterliegende Klinke 13 in Ruhelage befindet. Dieser Aufsatz 27 ist mit zwei Schrauben 28.1 und 28.2 mit dem Tragarm 15 verbunden.

Eine funktionsfähige Stapelsäule einer "gewünschten Teilung wird dadurch hergestellt; dass entsprechende Lagerböcke 7 auf die Achsstummel 11.1 und 11.2 der Klinken 13 aufgeschoben und zusammen mit diesen Klinken 13 in die Führungen 6 eingeschöben:werden. Eine Länge I der Lagerböcke 7 ist dabei so gewählt, dass eine gewünschte Teilung erreicht wird.

Soll eine Stapelsäule P mit einer anderen Teilung hergestellt werden, so können die vorhandenen Lagerböcke 7 mit den entsprechenden Klinken aus den Führungen 6 geschoben werden und durch Lagerböcke einer anderen Länge ersetzt werden. Denkbar ist allerdings auch, dass die Lagerböcke 7 immer eine gleiche Länge aufweisen, jedoch zwischen zwei Lagerböcken Distanzstücke eingesetzt werden, so dass durch diese Distanzstücke eine entsprechende Beabstandung der Bohrungen 10 und damit der Achsen 12 der Klinken 13 erreicht wird.

Denkbar liegt auch, dass eine Serie von Stapelsäulen mit entsprechenden Lagerböcken für eine gewünschte Teilung versehen wird, eine andere Serie von Stapelsäulen jedoch mit Lagerböcken für eine andere Teilung. Denkbar ist auch, dass die gesamte Anordnung einem Kunden mit unterschiedlichen Lagerböcken oder Distanzstücken angeboten wird, so dass sich der Kunde selbst eine Stapelsäule zusammenstellen kann. Die Klinken können dabei gleich oder auch unterschiedlich sein, insbesondere können in der Länge unterschiedliche Klinken angeboten werden.

Die Nase 19 des Einsatzes 18 dient vor allem dazu, eine nachfolgende Klinke aus einer Ruhelage in eine Bereitschaftsstellung und aus der Bereitschaftsstellung in eine Arbeitsstellung zu bringen, wie dies insbesondere in der DE 38 11 310 C2 beschrieben wird. Deshalb muss auch die Höhe h der Nase 19 einer gewünschten Teilung angeglichen werden.

Auch der Aufsatz 27 ist austauschbar und kann gewünschten Vorgaben angepasst werden. Durch entsprechende Auf- oder Ansätze kann auch der Tragarm 15 der Klinke 13 verlängert oder auch verschleissfester ausgestellt werden. Ferner ist daran gedacht, auch der Unterfläche 25 des Tragarms 15 einen Ansatz anzusetzen, der nach unten abragt und ein auf der unteren Klinke liegendes Lagergut an den Tragarm dieser Klinke andrückt.

### Bezugszeichenliste

| | | | | | |
|---|---|---|---|---|---|
| 1 | Seitenwange | 34 | | 67 | |
| 2 | Seitenwange | 35 | | 68 | |
| 3 | Rückwand | 36 | | 69 | |
| 4 | Anschlag | 37 | | 70 | |
| 5 | Innenwand | 38 | | 71 | |
| 6 | Führung | 39 | | 72 | |
| 7 | Lagerbock | 40 | | 73 | |
| 8. | Winkel | 41 | | 74 | |
| 9 | Nut | 42 | | 75 | |
| 10 | Bohrung | 43 | | 76 | |
| 11 | Achsstummel | 44 | | 77 | |
| 12 | Achse | 45 | | 78 | |
| 13 | Klinke | 46 | | 79 | |
| 14 | Grundkörper | 47 | | | |
| 15 | Tragarm | 48 | | | |
| 16 | Steuerarm | 49 | | | |
| 17 | Ausnehmung | 50 | | h | Höhe von 19 |
| 18 | Einsatz | 51 | | | |
| 19 | Nase | 52 | | l | Länge von 7 |
| 20 | Schraube | 53 | | | |
| 21 | Frontstreifen | 54 | | | |
| 22 | Nut | 55 | | | |
| 23 | Bohrung | 56 | | | |
| 24 | Bohrung | 57 | | | |
| 25 | Unterfläche | 58 | | | |
| 26 | Ausnehmung | 59 | | | |
| 27 | Aufsatz | 60 | | P | Stapelsäule |
| 28 | Schraube | 61 | | | |
| 29 | | 62. | | | |
| 30 | | 63 | | | |
| 31 | | 64 | | | |
| 32 | | 65 | | | |
| 33 | | 66 | | | |

## Patentansprüche

1. Klinke für elne Stapelsäule (P) zum Lagern von LagergUtern über- oder nebeneinander, wobei die Klinke geeignet ist, zwischen zwei Seitenwangen (1,2) um eine Achse (12) der Klinke drehbar angeordnet zu werden, und wobei die Achse (12) einem Grundkörper (14) zugeordnet ist und dieser aus einem Tragarm (15) einerseits der Achse (12) und einem Steuerarm (16) andererseits der Achse (12) besteht, wobei der Tragarm (15) mit einem austauschbaren Aufsatz (27) oder Ansatz versehen ist
**dadurch gekennzeichnet,**
**dass** in eine Unterfläche (25) der Klinke (13) eine Ausnehmung (26) eingeformt ist,
so dass in einer Stapelsäule (P) mit der Klinke (13) in Ruhelage und einer darunter angeordneten, identischen Klinke in Ruhelage, die Ausnehmung (26) der Klinke (13) den Aufsatz (27) der unterangeordneten, identischen Klinke aufnimmt.

2. Klinke nach Anspruch 1, **dadurch gekennzeichnet, dass** der Grundkörper (14) im Guss - oder Spritzgussverfahren hergestellt ist, der Grundkörper (14) aus Kunststoff besteht,
und/oder der Grundkörper (14) und die Achse (12) einstückig hergestellt sind.

3. Bausatz aus einer Klinke nach Anspruch 1 oder 2 und austauschbaren Einsätzen (18) unterschiedlicher Höhe (h), wobei jeder Einsatz (18) mit dem steuer arm (16) des Klinke (13) verbindbar ist.

4. Bausatz nach Anspruch 3, **dadurch gekennzeichnet, dass** von dem Einsatz (18) jeweils eine keilförmige Nase (19) aufragt, die bei den unterschiedlichen Einsätzen (18) eine unterschiedliche Höhe (h) aufweist.

## Claims

1. A pawl for a stacking column (P) for storing stored articles above or next to one another, the pawl being suitable for being arranged rotatably about a spindle (12) of the pawl between two side cheeks (1, 2), and the spindle (12) being associated with a basic body (14) and said body consisting of a supporting arm (15) on one side of the spindle (12) and a control arm (16) on the other side of the spindle (12), the supporting arm (15) being provided with an exchangeable top attachment (27) or projection,
**characterised in that**
a cutout (26) is formed in an under-surface (25) of the pawl (13), so that in a stacking column (P) with the pawl (13) in a rest position and an identical pawl arranged thereunder in the rest position, the cutout (26) of the pawl (13) receives the top attachment (27) of the underneath, identical pawl.

2. A pawl according to Claim 1, **characterised in that** the basic body (14) is produced by a casting or injection-moulding method, the basic body (14) consists of plastics material, and/or the basic body (14) and the spindle (12) are produced in one piece.

3. An assembly consisting of a pawl according to Claim 1 or 2 and exchangeable inserts (18) of different heights (h), each insert (18) being able to be connected to the control arm (16) of the pawl (13).

4. An assembly according to Claim 3, **characterised in that** in each case a wedge-shaped nose (19) protrudes from the insert (18), which nose has a different height (h) for the different inserts (18).

## Revendications

1. Poignée pour une colonne d'empilage (P) pour le stockage de produits à stocker l'un au-dessus ou à côté de l'autre, la poignée convenant pour être disposée entre deux joues latérales (1, 2), de manière rotative autour d'un axe (12) de la poignée, et l'axe (12) étant associé à un corps de base (14) et ce dernier étant composé, d'une part, d'un bras de support (15) de l'axe (12) et, d'autre part, d'un bras de commande (16) de l'axe (12), le bras de support (15) étant équipé d'une rehausse (27) ou épaulement échangeable,
**caractérisée par le fait**
**que** dans une face inférieure (25) de la poignée (13) est formé un évidement (26), de sorte que, dans une colonne d'empilage (P) avec la poignée (13) en position et repos et une poignée identique disposée au-dessous de cette dernière, l'évidement (26) de la poignée (13) reçoit la rehausse (27) de la poignée identique disposée au-dessous.

2. Poignée selon la revendication 1, **caractérisée par le fait que** le corps de base (14) est réalisée par un procédé de moulage ou de moulage par injection, le corps de base (14) est réalisé en matière plastique, et/ou que le corps de base (14) et l'axe (12) sont réalisés d'une seule pièce.

3. Kit de construction composé d'une poignée selon la revendication 1 ou 2 et d'inserts échangeables (18) de hauteur différente (h), chaque insert (18) pouvant être relié au bras de commande (16) de la poignée (13).

4. Kit de construction selon la revendication 3, **caractérisé par le fait que** de l'insert (18) ressort chaque fois un nez cunéiforme (19) qui présente, dans les différents inserts (18), une hauteur différente (h).
